# EUROPEAN PATENT SPECIFICATION

(11) **EP 0 352 980 B1**
(45) Date of publication and mention of the grant of the patent: **01.06.1994**
(21) Application number: 89307437.7
(22) Date of filing: 21.07.1989
(51) Int. Cl.: G11B 5/588, G11B 15/467

(54) **Controlling dynamic tracking heads of digital video tape recorders**
Steuerung von dynamischen Spurverfolgungsköpfen eines Videobandaufnahmegerätes
Contrôle de têtes pour un suivi dynamique de piste pour un magnétoscope

(30) Priority: 28.07.1988 JP 189478/88
(43) Date of publication of application: 31.01.1990
(73) Proprietor: SONY CORPORATION, Tokyo 141 (JP)
(72) Inventor: Furuyama, Takenori c/o Patents Division, Tokyo 141 (JP)
(74) Representative: Pilch, Adam John Michael

(56) References cited:
- EP-A- 0 067 562
- EP-A- 0 131 316

## Description

This invention relates to methods of and apparatus for controlling dynamic tracking heads of digital video tape recorders.

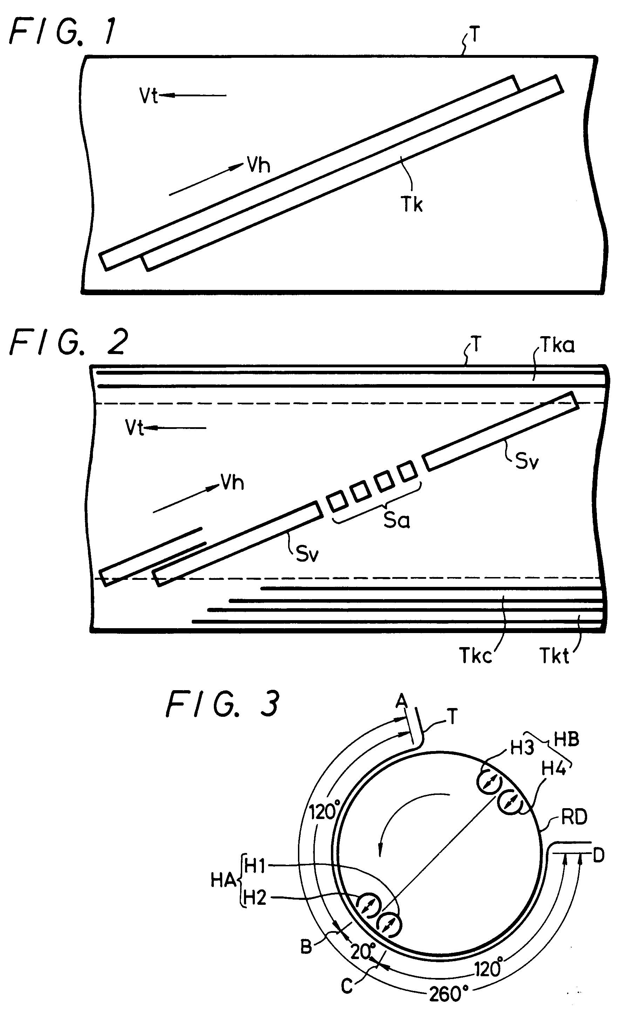

According to the operation of a previously-proposed helical scan type analog video tape recorder (VTR) for recording an analog video signal by means of a rotary magnetic head, a slant recorded track Tk is formed on a magnetic tape T and one field analog video signal is recorded on one track from the beginning portion thereof as shown in Figure 1 of the accompanying drawings. In Figure 1, Vh represents the direction of movement of the magnetic head and Vt represents the transportation direction of the magnetic tape T.

When a video signal is reproduced from the magnetic tape T in a variable tape speed playback mode such as a still picture playback mode, a slow motion playback mode or a high speed playback mode, the tracing locus of the magnetic head intersects the recorded track, thereby causing the level of a reproduced radio frequency (RF) signal to be lowered, the generation of a cross-talk component, and other adverse effects.

To solve the above-mentioned problems, a so-called dynamic tracking technique has been proposed. According to this technique, the magnetic head is mounted on a rotary head drum by means of, for example, a piezo-electric bimorph plate, and a control signal is applied to the piezo-electric bimorph plate to displace the magnetic head in the widthwise direction of the magnetic tape, so that even in a variable tape speed playback mode, the magnetic head can precisely trace a predetermined track.

In the above-described dynamic tracking technique, the displacing direction of the magnetic head at the starting portion is opposite to that at the ending portion of the track so that when the magnetic head moves or jumps from the end portion of the predetermined video track (field) to the starting portion of the next predetermined video track (field), the polarity of the control signal must be inverted thereby moving the magnetic head from one end portion of its range of displacement to its other end portion. This movement of the magnetic head is carried out outside of the tape wrapping range and during a period (blank period) in which the magnetic head rotates without contacting the magnetic tape. US Patent No. US-A-4 287 538 discloses an apparatus for controlling the movement of the magnetic head or the track jumping of the magnetic head, as described above.

Recently, an international standard known as the D-1 Standard has been agreed for a digital VTR for digitally recording a component type video signal, that is a signal comprising a luminance signal Y and difference chrominance signals R-Y and B-Y. The D-1 Standard is described in SMPTE papers 224M to 228M "Proposed American National Standard for Component Digital Television Recording 19 mm Type D-1 Cassette Format".

Figure 2 of the accompanying drawings is a diagrammatic view of a section of a magnetic tape T, and illustrating a slant track recorded thereon according to the D-1 standard. This slant recorded track is called a "program track" and comprises two segmented video tracks or sectors (half tracks) Sv in which digital video data are recorded, and four segmented audio tracks or sectors Sa in which there are recorded digital audio data. Further, a cue/audio track Tka, a servo control track Tkc and a time code track Tkt are formed on the magnetic tape T in the longitudinal direction thereof.

The track pattern is made substantially common to a 525/60 system having 525 horizontal lines and a field frequency of 60 Hz (nominal frequency) and a 625/50 system having 625 horizontal lines and a field frequency of 50 Hz.

The D-1 system format handles a large amount of data so that a 4-channel processing system is used in order to reduce the transmission rate of data. As, for example, shown in Figure 3 of the accompanying drawings, four magnetic heads H1, H2, H3 and H4 are paired two by two thereby to provide head pairs HA and HB. The head pairs HA and HB are mounted on a rotary head drum RD with an angular displacement of 180 degrees. The magnetic tape T is wound around the rotary head drum RD over a tape wrapping angle of 260 degrees. Video signal data are recorded on recorded tracks of tape wrapping angles of 120 degrees between points A and B and between points C and D, whereas audio data is recorded on the recorded track of a tape wrapping angle of 20 degrees between the points B and C.

The two slant recorded tracks Sv shown in Figure 2 are sequentially formed on the magnetic tape T by the head pairs HA and HB.

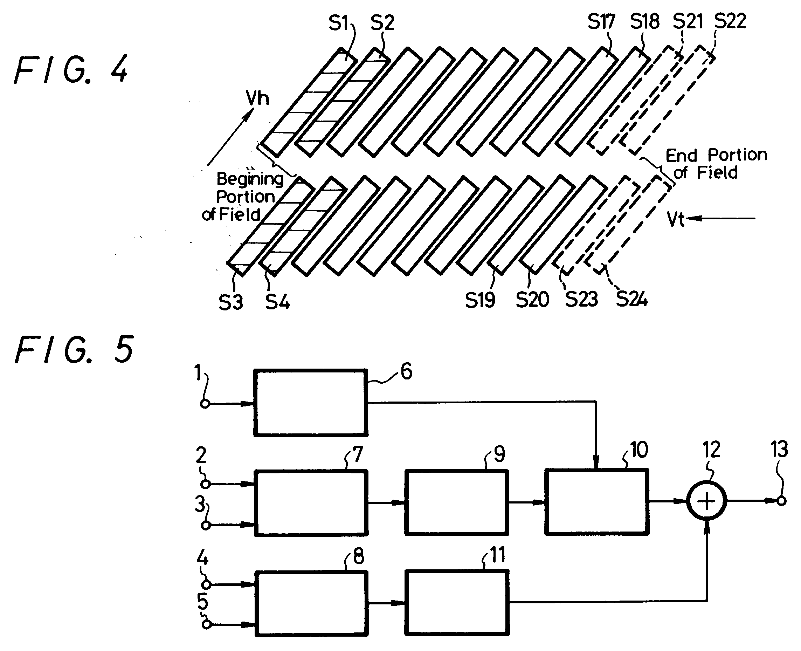

In the case of the 525/60 system format, one field of video data is recorded on 20 segmented video tracks S1 to S20 which correspond to 10 slant tracks as shown by solid lines in Figure 4 of the accompanying drawings.

In the case of the 625/50 system format, while the data transmission rate is the same as that of the 525/60 system format, the duration of the field cycle thereof is long so that one field of video data is recorded on 24 segmented video tracks S1 to S24 (four segmented video tracks S21 to S24 being additionally provided) which correspond to 12 slant tracks.

In both cases, the four segmented video tracks S1 to S4 shown cross-hatched in Figure 4 respectively correspond to the four magnetic heads H1 to H4 shown in Figure 3, thus forming one segment set.

The recording of one field of video data is started from the segmented video tracks S1 and S2 (the upper side of Figure 4) which start from substantially the central portion of the magnetic tape in its width direction and is ended at the end portions of the segmented video tracks S19, S20 or S23, S24 which begin with the nearby-portion of the servo control track Tkc (see Figure 2).

When the digital VTR having the D-1 type format reproduces the recorded video signal in the variable tape speed playback mode, there is then presented the following problem of data dropout.

As earlier noted, according to the D-1 type format, the starting portion and the ending portion of one field are both located at the central portion of the magnetic tape and the length of one field in the longitudinal direction of the track is short. For this reason, mainly from a mechanical standpoint, it is difficult for the magnetic head to jump from the end portion of the predetermined field to the starting portion of the next predetermined field during a period in which the magnetic head passes this short distance including the segmented audio tracks by the above-mentioned dynamic tracking technique. As a result, reproduced data at the starting portion of the field, for example, reproduced data of three segmented video tracks (half tracks) cannot be obtained sufficiently so that the image quality of the reproduced picture is degraded.

European Patent Application Serial No. EP-A-0 131 316 discloses a video tape head tracking technique for a tape format similar to that shown in Figure 1. A sawtooth-shaped control signal sets the tape head height, and a stepping signal generator produces incrementally-changing control signals, as a result of which disturbances in reproduction during a speed change are minimised.

According to an aspect of the present invention there is provided a method of controlling a dynamic tracking head of a digital video tape recorder by which a digital video signal is recorded, wherein one field of said digital video signal is recorded on a plurality of segmented slant video tracks formed on a video tape wrapped around a head drum carrying said dynamic tracking head via displacement means, and in a reproducing mode said video tape is transported at a different speed from that of the recording mode, the method comprising the steps of:
detecting the transportation speed of the video tape;
forming a predetermined signal waveform in response to a pulse signal generated in accordance with rotation of said head drum;
reforming said predetermined signal waveform in response to said detected transportation speed of the video tape;
determining an initial head position by detecting a track position on the video tape so that said dynamic tracking head can be located precisely at a beginning position of said segmented video tracks; and
combining said reformed predetermined signal waveform and said determined initial head position for generating a drive signal for said displacement means of said dynamic tracking head;
characterised by increasing the rotational speed of said head drum to a speed faster than the rotational speed of said recording mode so that said plurality of segmented video tracks can be traced faster than in said recording mode, whereby a sufficient time can be provided for said dynamic tracking head to jump from an end portion of said plurality of segmented video tracks after all of the tracks of said one field of said digital signal have been reproduced to a beginning portion of another plurality of segmented video tracks on which is recorded another field of said digital video signal.

According to another aspect of the present invention there is provided apparatus for controlling a dynamic tracking head of a digital video tape recorder by which a digital video signal is recorded, wherein one field of said digital video signal is recorded on a plurality of segmented slant video tracks formed on a video tape wrapped around a head drum carrying said dynamic tracking head via displacement means, and in a reproducing mode said video tape is transported at a different speed from that of the recording mode, the apparatus comprising:
means for detecting the transportation speed of the video tape;
means for forming a predetermined signal waveform in response to a pulse signal generated in accordance with rotation of said head drum;
means for reforming said predetermined signal waveform in response to said detected transportation speed of the video tape;
means for determining an initial head position by detecting a track position on the video tape so that said dynamic tracking head can be located precisely at a beginning position of said segmented video tracks; and
means for combining said reformed predetermined signal waveform and said determined initial head position for generating a drive signal for said displacement means of said dynamic tracking head;
characterised by means for increasing the rotational speed of said head drum to a speed faster than the rotational speed of said recording mode so that said plurality of segmented video tracks can be traced faster than in said recording mode, whereby a sufficient time can be provided for said dynamic tracking head to jump from an end portion of said plurality of segmented video tracks after all of the tracks of said one field of said digital signal have been reproduced to a beginning portion of another plurality of segmented video tracks on which is recorded another field of said digital video signal.

A preferred embodiment of the present invention, to be described in greater detail hereinafter, provides an improved method and apparatus for controlling a dynamic tracking head which can overcome or at least reduce the above-described defects inherent in the previously-proposed technique.

According to the preferred method, a magnetic head can precisely trace a segmented video track from the beginning portion of each field during a variable speed playback mode. The preferred method can be applied to a playback mode with a desired tape speed.

The invention will now be described by way of example with reference to the accompanying drawings, throughout which like parts are referred to by like references, and in which:
Figure 1 is a diagrammatic view of a section of a magnetic tape, illustrating recorded tracks thereon according to the operation of a known analog VTR;
Figure 2 is a diagrammatic view of a section of a magnetic tape, illustrating recorded tracks thereon according to the operation of a previously-proposed digital VTR:
Figure 3 is a schematic diagram showing the head drum of the previously-proposed digital VTR;
Figure 4 is a schematic diagram showing the recording format of the digital VTR of Figure 3;
Figure 5 is a block diagram of a circuit according to an embodiment of the present invention;
Figures 6A and 6B are timing charts used to explain the operation of the circuit shown in Figure 5;
Figure 7 is a schematic diagram showing a recording format according to the embodiment of Figure 5;
Figure 8 is a schematic diagram showing a recording format according to another embodiment of the present invention; and
Figures 9A and 9B are timing charts used to explain the operation of the other embodiment of the present invention.

Figure 5 shows a circuit diagram for carrying out a head control method according to an embodiment of the present invention. Referring to Figure 5, a pulse signal obtained in response to rotation of a capstan is supplied via an input terminal 1 to a tape speed detecting circuit 6 which detects the tape speed. Input terminals 2 and 3 are supplied with two types of pulse signals obtained in response to the rotation of the rotary head drum, namely a drum pulse FG and a drum pulse PG. The frequency of the drum pulse FG is generally selected to be much higher than that of the drum pulse PG. The drum pulse FG and the drum pulse PG are supplied to an address counter 7. In this case, the drum pulse FG is supplied to the address counter 7 as a count clock and the drum pulse PG is supplied to the address counter 7 as a reset pulse for resetting the address counter 7.

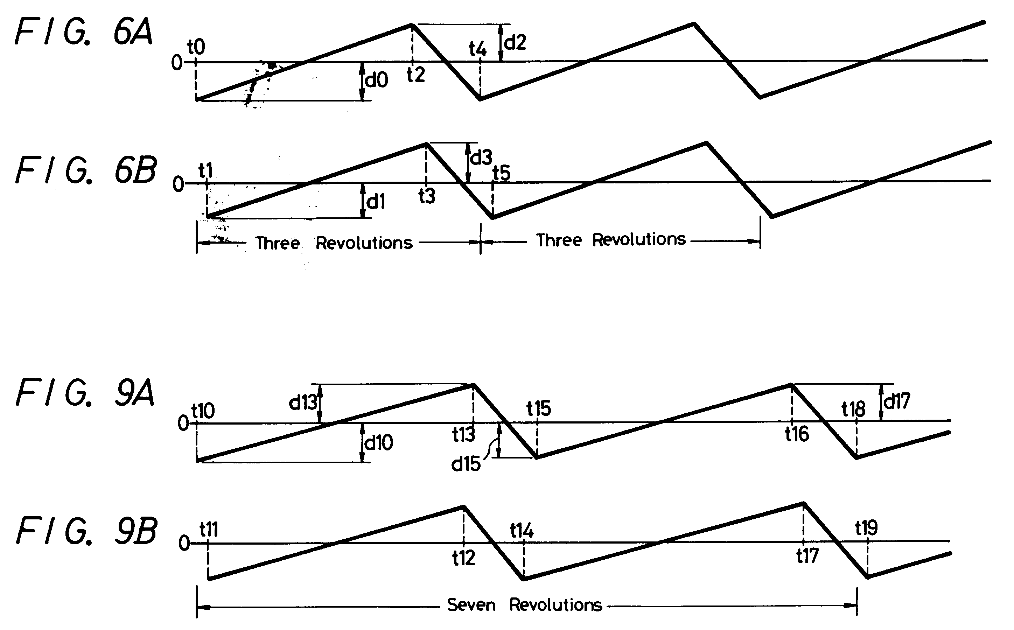

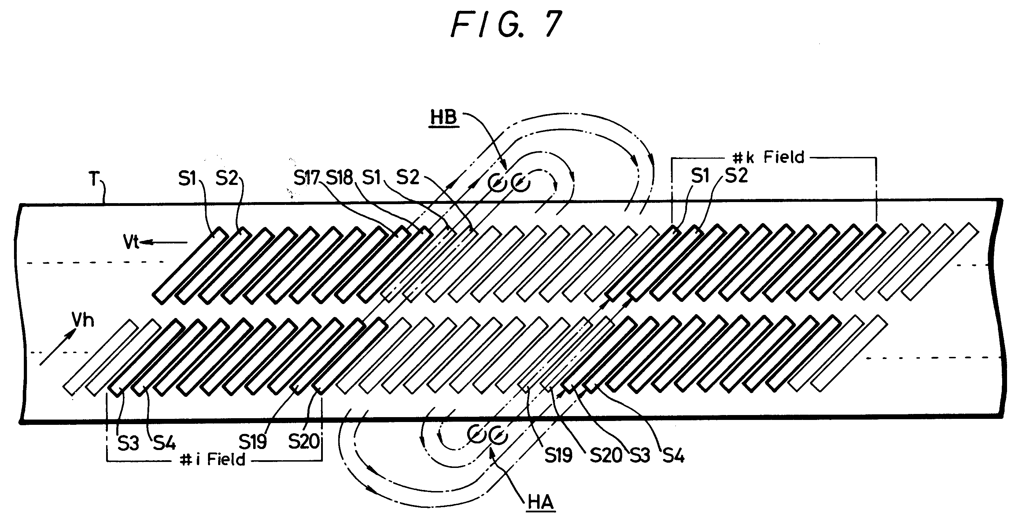

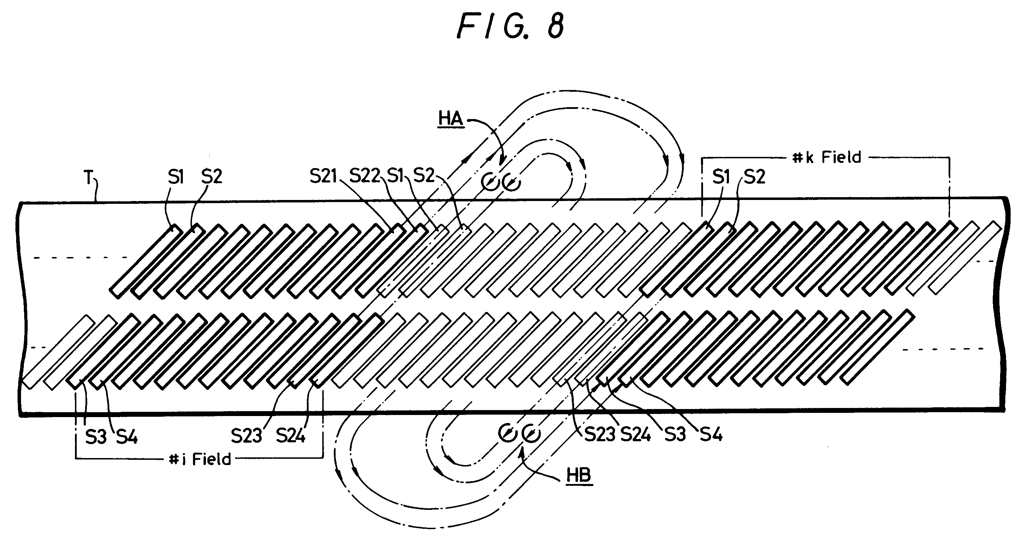

The output signal from the address counter 7 is supplied to a waveform memory 9 which utilises the output signal from the address counter 7 as an address signal to generate a signal whose level corresponds to the address signal. Thus, between two contiguous drum pulses PG, the waveform of the output signal from the waveform memory 9 can be represented as an inclined waveform as shown in Figure 6A.

Referring back to Figure 5, the output signal from the waveform memory 9 is supplied to a multiplier 10. The multiplier 10 is also supplied with the signal from the tape speed detecting circuit 6 as a coefficient for the multiplication. Accordingly, the multiplier 10 changes the inclination or slope of the inclined waveform of the output signal from the waveform memory 9 in response to the tape speed.

In addition, the initial head height, or the initial track height of each field has to be determined. The capstan pulse and a reproduced CTL signal are supplied through input terminals 4 and 5 to a tape position detecting circuit 8 which detects the tape position. On the basis of the detected result, a head height memory 11 generates a head height signal which is supplied to an adder 12, in which it is added to the inclined waveform signal (having the inclination corresponding to the tape speed) from the multiplier 10, the added signal being fed to an output terminal 13. The signal developed at the output terminal 13 is used to drive a piezo-electric bimorph plate or a mechanical actuator (not shown) to cause the video head to trace the track precisely.

The dynamic tracking operation of the digital VTR embodying the present invention will now be described with reference to Figures 6A, 6B and 7, when applied to the D-1 format 525/60 system as shown in Figure 7.

In this embodiment, let the following operation be assumed. In the twice-normal tape speed reproduction mode, when the video head finishes the tracing of a field i, the video head jumps the next field j (which includes a group of segmented video tracks shown by fine lines at the central portion of Figure 7) to the next field k to start to trace the field k.

More specifically, one head pair, for example HA, tracing the segmented video tracks S17 and S18 of the field i reaches the other tape edge after the magnetic tape non-contact blank period and again comes into contact with the magnetic tape T as shown by two-dot chain lines in Figure 7. After the head pair HA traces the final segmented video tracks S19, S20 of the field j, the head pair HA starts tracing the initial segmented video tracks S1, S2 of the field k.

The other head pair, for example the head pair HB, tracing the final segmented video tracks S19, S20 of the field i finishes tracing the first segmented video tracks S1, S2 of the field j and then reaches the other tape edge after the magnetic tape T non-contact blank period. Thereafter, the head pair HB starts tracing the segmented video tracks S3, S4 of the field k.

In this embodiment, in order to enable both the head pairs HA, HB to trace the segmented video tracks as described above, the displacement of the head pairs is controlled as shown in Figures 6A and 6B.

Assuming a time t0 at which the head pair HA starts tracing the initial segmented video tracks S1, S2 of the field i to be a reference point, as shown in Figure 6A, the head pair HA is displaced in the negative direction (downstream side of the magnetic tape T) at maximum. At a time t2 at which the rotating head drum has rotated a little more than twice and the head pair HA has finished tracing the segmented video tracks S17, S18 of the field i the head pair HA is displaced in the positive direction (upstream side of the magnetic tape T) at maximum. Then, during a period which is the sum of the blank period and the tracing period of the segmented video tracks S19, S20 of the field i, the displacement direction of the head pair HA is inverted. At a time t4 at which the head pair HA begins to trace the initial segmented video tracks S1, S2 of the field k the head pair HA is again displaced in the negative direction at maximum in similar manner to that at the reference time t0. In the normal playback mode, the revolution rate of the head drum is typically 150 r.p.s so that during one field period, the rotating head drum is rotated at 150/60 = 2.5 times. This, however, cannot provide sufficient time for the head pair to jump the tracks. In order to solve this problem, the revolution rate of the head drum is increased so as to rotate three times within one field time. With this arrangement, the time for the head pair to trace from the segmented video tracks S1, S2 to the segmented video tracks S17, S18 of the field i is reduced so that the time necessary for the head pair to jump the tracks is inevitably increased.

As shown in Figure 6A, the rotating head drum is rotated three times during the period from the reference time t0 to the next tracing start time t4.

The other head pair HB begins to trace the segmented video tracks S3, S4 of the field i from a time t1 slightly delayed after the reference time t0, as shown in Figure 6B. As shown, at this time t1, the head pair HB is displaced in the negative direction (downstream side of the magnetic tape T) at maximum. At a time t3 after the time t1 during which the head drum has rotated a little more than twice and the head pair HB has finished tracing the final segmented video tracks S19, S20 of the field i, the head pair HB is displaced in the positive direction (upstream side of the magnetic tape T) at maximum. Then, as mentioned before, during a period which is the sum of the tracing period of the initial segmented video tracks S1, S2 of the field i and the blank period, the displacement direction of the head pair HB is inverted and at a time t5 at which the head pair HB begins to trace the segmented video tracks S3, S4 of the field k, the head pair HB is again displaced in the negative direction in similar manner to that at the time t1 at maximum.

The trace and the jump of both the head pairs HA and HB will be repeatedly carried out in a cycle which is three times the rotation cycle of the head drum.

Since the magnetic tape T is transported by a predetermined amount during the period between the respective trace starting times t0 and t1 of both the head pairs HA and HB, an absolute value of a displacement amount d0 of one head pair HA at the trace starting time t0 is equal to an absolute value of a displacement amount d3 of the other head pair HB at the trace ending time t3, and an absolute value of a displacement amount d2 of one head pair HA at the trace ending time t2 is equal to an absolute value of a displacement amount d1 of the other head pair HB at the trace starting time t1. Relationships expressed as d0 > d2 and d1 < d3 are established between the displacement amounts of each of the same head pairs.

In a digital VTR, the displacement amount of the head pair is large so that the aforementioned piezo-electric bimorph plate may be replaced with a stepping motor and a steel belt for displacing the magnetic head, as is disclosed in the present applicants' Japanese Patent Application No. 62-327 782.

As described above, according to the present embodiment, a sufficiently long time which is the sum of the blank period and the tracing period of the half track (segmented video track) can be used for the magnetic head to jump the tracks so that the magnetic head can positively start tracing the initial half track of the next predetermined field.

According to the present technique, as described above, the revolution rate of the head drum is increased from 2.5 r.p.s. to 3.0 r.p.s., or the revolution rate of the head drum is increased by 6/5 times the revolution rate of the head drum in the recording mode and the digital video signal is timebase-expanded by using a frame memory, whereby a picture can be reproduced successively at a field unit.

Further, in the normal playback mode, the revolution rate of the head drum is increased to be, for example, 6/5 times, thereby causing the magnetic head to jump the tracks.

Another embodiment of the present invention will now be described with reference to Figure 8 and Figures 9A and 9B, in which the dynamic tracking method for a digital VTR is applied to the 625/50 system D-1 format. In Figure 8 and Figures 9A and 9B, like parts corresponding to those of Figures 6A and 6B and Figure 7 are marked with the same references and therefore will not be described in detail.

Figure 8 shows the 625/50 system D-1 format. As previously described, according to the 625/50 system D-1 format, one field of video data is recorded in 24 segmented video tracks. Also in this embodiment, let it be assumed that in the variable tape speed playback mode, when the tracing of the field i has ended, the magnetic head jumps the next field j (in which a group of segmented video tracks shown by thin lines at the central portion of Figure 8 are included) and then the magnetic head starts tracing the next field k.

With respect to the tracing operations of both the head pairs HA, HB, the segmented video tracks S17 to S20 of the end portion of each field in the explanation of Figure 7 may be replaced with the segmented video tracks S21 to S24.

In this embodiment, during one field period, both the head pairs HA and HB trace 7 x 2 tracks so that the head pairs, which trace the initial video sectors, are exchanged at every field.

Assuming that, as for example shown in Figure 9A, one head pair HA starts tracing the initial segmented video tracks S1, S2 of the field i at a time t10 and that, as shown in Figure 9B, the other head pair HB starts tracing the segmented video tracks S3, S4 of the field i at a time t11 slightly delayed after the time t10, then the head pair HB finishes tracing the segmented video tracks S21 and S22 of the field i at a time t12 at which the head drum has rotated 2.5 times from the time t11. On the other hand, the head pair HA finishes tracing the final segmented video tracks S23 and S24 of the field i at a time t13 at which the head drum has rotated three times from the time t10.

Both head pairs HB and HA, which jumped the tracks at the times t12 and t13, respectively start tracing the segmented video tracks S1, S2 and S3, S4 of the field k from times t14 and t15. In the field k, as opposed to the field i one head pair HA finishes tracing the segmented video tracks S21, S22 at a time t16 at which the head drum has rotated 2.5 times from the beginning of the tracing, and with a small delay time, the other head pair HB finishes tracing the final segmented video tracks S23, S24 at a time t17 at which the head drum has rotated three times from the beginning of the tracing.

At the completion of tracing the segmented video tracks of the field k, both head pairs HA and HB respectively jump the tracks during a period from respective times t16 and t17 to respective times t18 and t19. From the time t10 to the time t18, the head drum rotates seven times. Thereafter, the head pairs will repeatedly carry out the tracing operation and the jump operation in similar manner.

In this embodiment, the displacement amounts of the same head pairs in the same field are equal (d10 = d13 and d15 = d17), whereas the displacement amounts thereof in the different fields are changed in response to the duration of the tracing period of each field.

This embodiment can achieve similar action and effect to those of the first embodiment.

Further, in this embodiment, since availability of reproduced date is represented as 12/14, the revolution rate of the head drum is increased by 7/6 times.

While the present invention has been described for the case of the twice-normal tape speed playback mode, the present invention can also be applied to the playback mode with a different tape speed.

As set out above in detail, according to the present technique, since in the variable tape speed playback mode the rotary magnetic head jumps from one track to the other predetermined track during the period of the sum of the magnetic tape non-contact period and the tracing period of one half track, it is possible to obtain a dynamic tracking method for a digital VTR, by which the head can positively trace tracks from their starting portion of the field.

## Claims

1. A method of controlling a dynamic tracking head (HA, HB) of a digital video tape recorder by which a digital video signal is recorded, wherein one field of said digital video signal is recorded on a plurality of segmented slant video tracks (Sv) formed on a video tape (T) wrapped around a head drum (RD) carrying said dynamic tracking head (HA, HB) via displacement means, and in a reproducing mode said video tape (T) is transported at a different speed from that of the recording mode, the method comprising the steps of:
detecting the transportation speed of the video tape (T);
forming a predetermined signal waveform in response to a pulse signal generated in accordance with rotation of said head drum (RD);
reforming said predetermined signal waveform in response to said detected transportation speed of the video tape (T);
determining an initial head position by detecting a track position on the video tape (T) so that said dynamic tracking head (HA, HB) can be located precisely at a beginning position of said segmented video tracks (Sv); and
combining said reformed predetermined signal waveform and said determined initial head position for generating a drive signal for said displacement means of said dynamic tracking head (HA, HB);
characterised by increasing the rotational speed of said head drum (RD) to a speed faster than the rotational speed of said recording mode so that said plurality of segmented video tracks (Sv) can be traced faster than in said recording mode, whereby a sufficient time can be provided for said dynamic tracking head (HA, HB) to jump from an end portion of said plurality of segmented video tracks (Sv) after all of the tracks of said one field of said digital signal have been reproduced to a beginning portion of another plurality of segmented video tracks (Sv) on which is recorded another field of said digital video signal.

2. Apparatus for controlling a dynamic tracking head (HA, HB) of a digital video tape recorder by which a digital video signal is recorded, wherein one field of said digital video signal is recorded on a plurality of segmented slant video tracks (Sv) formed on a video tape (T) wrapped around a head drum (RD) carrying said dynamic tracking head (HA, HB) via displacement means, and in a reproducing mode said video tape (T) is transported at a different speed from that of the recording mode, the apparatus comprising:
means (6) for detecting the transportation speed of the video tape (T);
means (7, 9) for forming a predetermined signal waveform in response to a pulse signal generated in accordance with rotation of said head drum (RD);
means (10) for reforming said predetermined signal waveform in response to said detected transportation speed of the video tape (T);
means (8) for determining an initial head position by detecting a track position on the video tape (T) so that said dynamic tracking head (HA, HB) can be located precisely at a beginning position of said segmented video tracks (Sv); and
means (12) for combining said reformed predetermined signal waveform and said determined initial head position for generating a drive signal for said displacement means of said dynamic tracking head (HA, HB);
characterised by means for increasing the rotational speed of said head drum (RD) to a speed faster than the rotational speed of said recording mode so that said plurality of segmented video tracks (Sv) can be traced faster than in said recording mode, whereby a sufficient time can be provided for said dynamic tracking head (HA, HB) to jump from an end portion of said plurality of segmented video tracks (Sv) after all of the tracks of said one field of said digital signal have been reproduced to a beginning portion of another plurality of segmented video tracks (Sv) on which is recorded another field of said digital video signal.

## Patentansprüche

1. Verfahren zum Steuern eines dynamischen Spurfolgekopfs (HA, HB) eines digitalen Videobandrecorders, durch den ein digitales Videosignal aufgezeichnet wird, wobei ein Teilbild des digitalen Videosignals auf einer Anzahl von segmentierten schrägen Videospuren (Sv) aufgezeichnet ist, die auf einem Videoband (T) gebildet sind, das um eine Kopftrommel (RD) gewunden ist, die den dynamischen Spurfolgekopf (HA, HB) über Verstellmittel trägt, und wobei in einem Wiedergabemodus das Videoband (T) mit einer unterschiedlichen Geschwindigkeit gegenüber der des Aufzeichnungsmodus transportiert wird, wobei das Verfahren folgende Schritte aufweist:
Ermitteln der Transportgeschwindigkeit des Videobandes (T);
Bilden einer vorgegebenen Signalschwingungsform in Abhängigkeit von einem Impulssignal, das gemäß einer Rotation der Kopftrommel (RD) erzeugt wird;
Umgestalten der vorgegebenen Signalschwingungsform in Abhängigkeit von der ermittelten Transportgeschwindigkeit des Videobandes (T);
Bestimmen einer Ausgangskopfposition durch Ermitteln einer Spurposition auf dem Videoband (T), so daß der dynamische Spurfolgekopf (HA, HB) genau an einer Anfangsposition der segmentierten Videospuren (Sv) angeordnet werden kann; und
Kombinieren der umgestalteten vorgegebenen Signalschwingungsform und der bestimmten Ausgangskopfposition zum Erzeugen eines Ansteuersignals für die Verstellmittel des dynamischen Spurfolgekopfs (HA, HB);
**gekennzeichnet durch**
Steigern der Drehgeschwindigkeit der Kopftrommel (RD) auf eine Geschwindigkeit, die größer als die Drehgeschwindigkeit beim Aufzeichnungsmodus ist, so daß die Anzahl der segmentierten Videospuren (Sv) schneller als im Aufzeichnungsmodus aufgespürt werden kann, wodurch eine ausreichende Zeit für den dynamischen Spurfolgekopf (HA, HB) vorgesehen werden kann, um von einem Endbereich der Anzahl der segmentierten Videospuren (Sv), nachdem alle Spuren des einen Teilbildes des digitalen Signals wiedergegeben sind, zu einem Anfangsbereich von einer anderen Anzahl von segmentierten Videospuren (Sv) zu springen, auf denen ein anderes Teilbild des digitalen Videosignals aufgezeichnet ist.

2. Vorrichtung zum Steuern eines dynamischen Spurfolgekopfs (HA, HB) eines digitalen Videobandrecorders, durch den ein digitales Videosignal aufgezeichnet wird, wobei ein Teilbild des digitalen Videosignals auf einer Anzahl von segmentierten schrägen Videospuren (Sv) aufgezeichnet ist, die auf einem Videoband (T) gebildet sind, das um eine Kopftrommel (RD) gewunden ist, die den dynamischen Spurfolgekopf (HA, HB) über Verstellmittel trägt, und wobei in einem Wiedergabemodus das Videoband (T) mit einer unterschiedlichen Geschwindigkeit gegenüber der des Aufzeichnungsmodus transportiert wird, wobei die Vorrichtung aufweist:
Mittel (6) zum Ermitteln der Transportgeschwindigkeit des Videobandes (T);
Mittel (7, 9) zum Bilden einer vorgegebenen Signalschwingungsform in Abhängigkeit von einem Impulssignal, das gemäß einer Rotation der Kopftrommel (RD) erzeugt wird;
Mittel (10) zum Umgestalten der vorgegebenen Signalschwingungsform in Abhängigkeit von der ermittelten Transportgeschwindigkeit des Videobandes (T);
Mittel (8) zum Bestimmen einer Ausgangskopfposition durch Ermitteln einer Spurposition auf dem Videoband (T), so daß der dynamische Spurfolgekopf (HA, HB) genau an einer Anfangsposition der segmentierten Videospuren (Sv) angeordnet werden kann; und
Mittel (12) zum Kombinieren der umgestalteten vorgegebenen Signalschwingungsform und der bestimmten Ausgangskopfposition zum Erzeugen eines Ansteursignals für die Verstellmittel des dynamischen Spurfolgekopfs (HA, HB);
**gekennzeichnet durch**
Mittel zum Steigern der Drehgeschwindigkeit der Kopftrommel (RD) auf eine Geschwindigkeit, die größer als die Drehgeschwindigkeit beim Aufzeichnungsmodus ist, so daß die Anzahl der segmentierten Videospuren (Sv) schneller als im Aufzeichnungsmodus aufgespürt werden kann, wodurch eine ausreichende Zeit für den dynamischen Spurfolgekopf (HA, HB) vorgesehen werden kann, um von einem Endbereich der Anzahl der segmentierten Videospuren (Sv), nachdem alle Spuren des einen Teilbildes des digitalen Signals wiedergegeben sind, zu einem Anfangsbereich von einer anderen Anzahl von segmentierten Videospuren (Sv) zu springen, auf denen ein anderes Teilbild des digitalen Videosignals aufgezeichnet ist.

## Revendications

1. Procédé de contrôle d'une tête de suivi de piste dynamique (HA, HB) d'un magnétoscope numérique grâce auquel un signal vidéo numérique est enregistré, dans lequel un champ dudit signal vidéo numérique est enregistré sur une pluralité de pistes vidéo inclinées segmentées (Sv), formées sur une bande vidéo (T) enroulée autour d'un tambour équipé de têtes (RD) comportant ladite tête de suivi de piste dynamique (HA, HB) via un dispositif de déplacement, et dans un mode de reproduction ladite bande vidéo (T) est transportée à des vitesses différentes de celles du mode d'enregistrement, le procédé comprenant les étapes de :
détection de la vitesse de transport de la bande vidéo (T);
formant une forme d'onde de signal prédéterminée en réponse à un signal d'impulsion généré selon la rotation dudit tambour équipé de têtes (RD);
reformation de ladite forme d'onde du signal prédéterminé en réponse à la vitesse de transport détectée de la bande vidéo (T);
détermination d'une position de la tête initiale en détectant une position de la piste sur une bande vidéo (T) de sorte que ladite tête de suivi de piste dynamique (HA, HB) peut être située précisément sur la partie de début desdites pistes vidéo segmentées (Sv); et
combinaison de ladite forme d'onde du signal prédéterminé reformée et de ladite position initiale de la tête déterminée pour générer un signal de commande pour ledit dispositif de déplacement de ladite tête de suivi de piste dynamique (HA, HB);
caractérisé par l'augmentation de la vitesse de rotation dudit tambour équipé de têtes (RD) à une vitesse supérieure à la vitesse de rotation dudit mode d'enregistrement de sorte que ladite pluralité de pistes vidéo segmentées (Sv) peut être suivie plus rapidement que dans ledit mode d'enregistrement, grâce auquel un temps suffisant peut être fourni à ladite tête de suivi de piste dynamique (HA, HB) pour sauter à partir d'une partie d'extrémité de ladite pluralité de pistes vidéo segmentées (Sv) après que toutes les pistes d'un dit champ dudit signal numérique aient été reproduites, à une partie de début d'une autre pluralité de pistes vidéo segmentées (Sv) sur lequel est enregistré un autre champ dudit signal vidéo numérique.

2. Appareil pour commander une tête de suivi de piste dynamique (HA, HB) d'un magnétoscope numérique grâce auquel un signal vidéo numérique est enregistré, dans lequel un champ dudit signal vidéo numérique est enregistré sur une pluralité de pistes vidéo inclinées segmentées (Sv) formées sur une bande vidéo (T) enroulée autour d'un tambour équipé de têtes (RD) comportant ladite tête de suivi de piste dynamique (HA, HB) via un dispositif de déplacement, et dans un mode de reproduction ladite bande vidéo (T) est transportée à une vitesse différente de celle du mode d'enregistrement, l'appareil comprenant :
un dispositif (6) pour détecter la vitesse de transport de la bande vidéo (T);
un dispositif (7, 9) pour former une forme d'onde de signal prédéterminée en réponse à un signal d'impulsion généré selon la rotation dudit tambour équipé de têtes (RD);
un dispositif (10) pour reformer ladite forme d'onde du signal prédéterminé en réponse à ladite vitesse de transport détectée de la bande vidéo (T);
un dispositif (8) pour déterminer une position initiale de la tête en détectant une position de piste sur une bande vidéo (T) de sorte que ladite tête de suivi de piste dynamique (HA, HB) peut être située précisément sur une position de début desdits pistes vidéo segmentées (Sv); et
un dispositif (12) pour combiner ladite forme d'onde du signal prédéterminé reformée et ladite position des têtes initiales déterminées pour générer un signal de commande pour ledit dispositif de déplacement de ladite tête de suivi de piste dynamique (HA, HB);
caractérisé par un dispositif pour accroître la vitesse de rotation dudit tambour équipé de têtes (RD) pour une vitesse supérieure à la vitesse de rotation dudit mode d'enregistrement de sorte que ladite pluralité de pistes vidéo segmentées (Sv) peut être suivie d'une manière plus rapide que dans ledit mode d'enregistrement, grâce auquel un temps suffisant peut être fourni pour ladite tête de suivi de piste dynamique (HA, HB) pour sauter d'une partie d'extrémité de ladite pluralité de pistes vidéo segmentées (Sv) après que toutes les pistes d'un dit champ dudit signal numérique aient été reproduites sur une partie de début d'une autre pluralité de pistes vidéo segmentées (Sv) sur lequel est enregistré un autre champ dudit signal vidéo numérique.
